# EUROPÄISCHE PATENTSCHRIFT

(11) **EP 0 648 636 B1**
(45) Veröffentlichungstag und Bekanntmachung des Hinweises auf die Patenterteilung: **18.09.1996**
(21) Anmeldenummer: 94112908.2
(22) Anmeldetag: 19.08.1994
(51) Int. Cl.: B60K 13/04, F16L 55/033

(54) **Gummilager**
Rubber bearing
Palier de caoutchouc

(30) Priorität: 19.10.1993 DE 9315896 U
(43) Veröffentlichungstag der Anmeldung: 19.04.1995
(73) Patentinhaber: ERNST-APPARATEBAU GmbH & Co., D-58099 Hagen (DE)
(72) Erfinder: Brinkmann, Friedrich-Wilhelm, D-58135 Hagen (DE)
(74) Vertreter: COHAUSZ HASE DAWIDOWICZ & PARTNER

(56) Entgegenhaltungen:
- EP-A- 0 184 661
- EP-A- 0 320 088
- DE-A- 4 035 728
- DE-A- 4 207 583

## Beschreibung

Die Erfindung betrifft ein Gummilager mit einer auf einer einem Kraftfahrzeug abgewandten Seite angeordneten Aufnahmeöffnung zur Aufnahme eines an einem Schalldampfer befestigten Haltestabes, mit am Kraftfahrzeug befestigten Metallwinkeln zwischen denen ein Bolzen befestigt ist, der das Gummimaterial auf einer dem Kraftfahrzeug zugewandten Seite durchquert, wobei die Aufnahmeöffnung von einer Gummibuchse gebildet ist, die in einer Ausnehmung des Gummilagers begrenzt beweglich angeordnet ist, wobei die Ausnehmung um die Gummibuchse einen Freiraum bildet.

Es sind die unterschiedlichsten Formen und Konstruktionen von Gummilagern bekannt. Werden Gummilager für den Halt von Schalldämpfern bei Kraftfahrzeugen eingesetzt, so ist von Bedeutung, daß diese zum einen Schwingungen und Erschütterungen ausreichend aufnehmen und zum anderen eine hohe Stabilität und Haltbarkeit besitzen. Da diese Forderungen einander teilweise widersprechen, ist auf die Art der Konstruktion größten Wert zu legen.

Aus EP 32 00 88 ist ein Gummilager bekannt, bei dem der Schalldämpfer in einer Gummibuchse eingehängt wird, die am äußeren Rand des Gummilagers durch seitliche Stege gehaltert ist. Diese Aufhängung schützt den Schalldämpfer nur unzureichend vor vertikalen Schwingungen.

Aufgabe der Erfindung ist es, ein Gummilager der genannten Art so zu verbessern, daß bei einfacher Konstruktion und Herstellung Schwingungen und Erschütterungen optimal aufnehmbar sind und hierbei eine hohe Stabilität und Haltbarkeit gegeben ist.

Diese Aufgabe wird erfindungsgemäß dadurch gelöst, daß die Gummibuchse durch mindestens zwei armförmige gekrümmte Stege in etwa senkrecht zur Aufhängeachse gelagert ist, die mit einem Ende an der Gummibuchse und mit dem anderen Ende am äußeren Rand der Ausnehmung angeformt sind und daß die Gummibuchse auf der den Winkeln abgewandten Seite durch einen weiteren Steg am Rand des Gummilagers fest ist, der eine größere Breite aufweist als die der armförmigen Stege.

Die zusätzlichen gekrümmten Stege erhöhen die Stabilität der Gummibuchse zu den Seiten hin, ohne die Aufnahmefähigkeit von Schwingungen und Erschütterungen zu verringern, sodaß die Wirkung des Gummilagers im Abfangen von Schwingungen und Erschütterungen sehr gut ist und hierbei immer noch eine hohe Stabilität und Haltbarkeit gegeben ist.

Von besonderem Vorteil ist hierbei, wenn die Gummibuchse auf der den Winkeln abgewandten Seite durch einen weiteren Steg am Rand des Gummilagers fest ist, der eine größere Breite aufweist als die der armförmigen Stege.

Das Gummilager kann bei verschiedensten Kraftfahrzeugen mit unterschiedlichen Abständen der Gewindebohrung befestigt werden, wenn die in den Metallwinkeln zum Befestigen am Kraftfahrzeug angeordneten Öffnungen Langlöcher sind.

Ein Ausführungsbeispiel der Erfindung ist in Zeichnungen dargestellt und wird im folgenden näher beschrieben. Es zeigen:
Figur 1: Eine Seitenansicht,
Figur 2: eine Stirnansicht,
Figur 3: eine Unteransicht.

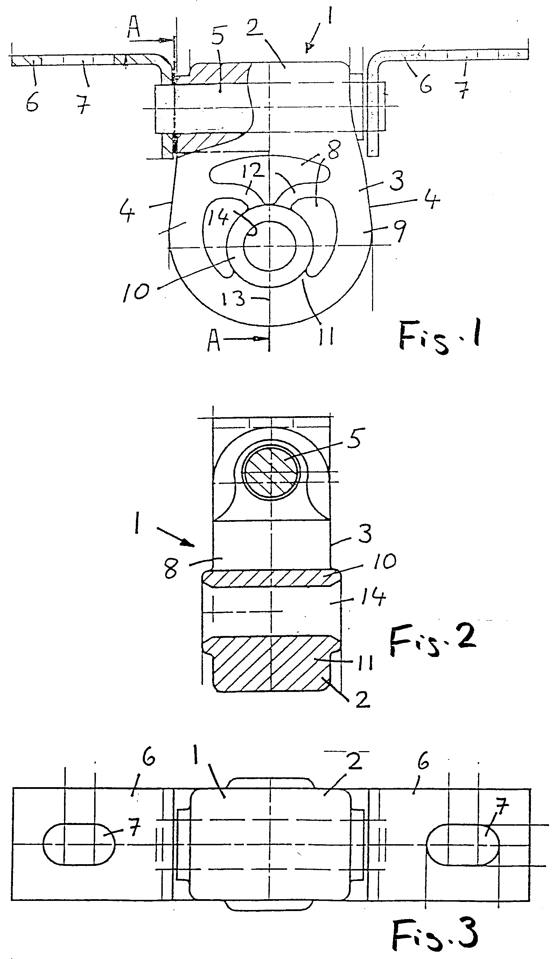

Das Gummilager 1 weist einen Gummiblock 2 auf mit zwei zueinander parallelen Seitenflächen 3 und zwei Stirnseiten 4.

In dem dem Kraftfahrzeug zugewandten Bereich ist der Block 2 von einem metallenen Bolzen 5 durchqert, der parallel zu den Seitenflächen 3 liegt und an beiden Stirnseiten 4 austritt. An den Enden des Bolzens 5 ist jeweils ein Metallwinkel 6 befestigt, der Langlöcher 7 besitzt, um Schrauben aufnehmen zu können, mit denen das Gummilager am Kraftfahrzeug angeschraubt wird. Hierbei kann der Abstand der Schrauben aufgrund der Langlöcher 7 zueinander unterschiedlich sein, sodaß das Gummilager an Befestigungsstellen angeschraubt werden kann, deren Gewindebohrungen unterschiedliche Abstände zueinander haben.

In dem dem Kraftfahrzeug abgewandten Bereich ist im Material des Lagers 1 eine Ausnehmung 8 eingebracht, die außenseitig von einem teilkreisförmigen Steg 9 umgeben ist, der den Rand der Ausnehmung 8 bildet. In dieser Ausnehmung 8 ist eine Gummibuchse 10 angeordnet, die mit einem unteren breiten Steg 11 am Steg bzw. Rand 9 angeformt ist.

Darüber hinaus ist die Gummibuchse 10 im oberen, dem Kraftfahrzeug zugewandten Bereich durch zwei armförmige gekrümmte Stege 12 am Rand der Ausnehmung 8 und damit am Steg 9 befestigt. Hierbei sind die Stege 12 mit dem einen Ende an der Gummibuchse 10 und dem anderen äußeren Ende am Steg bzw. Rand 9 angeformt. Block 2, Buchse 10 und die Stege 11, 12 sind damit einstückig aus Gummi geformt, wobei alle Teile klappsymmetrisch zu einer Achse 13 liegen, die parallel zu den Seitenflächen 3 und senkrecht zum Bolzen 5 angeordnet ist.

Die Gummibuchse 10 bildet eine innere zylindrische Aufnahmeöffnung 14, in der ein Haltestab gelagert ist, der außen an einem Schalldämpfer vorsteht.

## Patentansprüche

1. Gummilager mit einer auf einer einem Kraftfahrzeug abgewandten Seite angeordneten Aufnahmeöffnung zur Aufnahme eines an einem Schalldämpfer befestigten Haltestabes, mit am Kraftfahrzeug befestigten Metallwinkeln (6) zwischen denen ein Bolzen (5) befestigt ist, der das Gummimaterial auf einer dem Kraftfahrzeug zugewandten Seite durchquert, wobei die Aufnahmeöffnung (14) von einer Gummibuchse (10) gebildet ist, die in einer Ausnehmung (8) des Gummilagers begrenzt beweglich angeordnet ist, wobei die Ausnehmung (8) um die Gummibuchse (10) einen Freiraum bildet, **dadurch gekennzeichnet,** daß die Gummibuchse (10) durch mindestens zwei armförmige gekrümmte Stege (12) in etwa senkrecht zur Aufhängeachse gelagert ist, die mit einem Ende an der Gummibuchse (10) und mit dem anderen Ende am äußeren Rand (9) der Ausnehmung (8) angeformt sind und daß die Gummibuchse (10) auf der den Winkeln (6) abgewandten Seite durch einen weiteren Steg (11) am Rand (9) des Gummilagers (11) fest ist, der eine größere Breite aufweist als die der armförmigen Stege (12).

2. Gummilager nach Anspruch 1, **dadurch gekennzeichnet,** daß die in den Metallwinkeln (6) zum Befestigen am Kraftfahrzeug angeordneten Öffnungen (7) Langlöcher sind.

## Claims

1. A rubber bearing having a receiving opening disposed on a side remote from a motor vehicle for receiving a retaining rod attached to an exhaust silencer and having metal angles (6) which are attached to the motor vehicle and between which a bolt (5) is attached which extends through the rubber material on a side adjacent the motor vehicle, wherein the receiving opening (14) is formed by a rubber bush (10) which is disposed with provision for limited movement in a recess (8) of the rubber bearing, the recess (8) forming a free space around the rubber bush (10), characterized in that the rubber bush (10) is borne substantially perpendicularly to the axis of suspension via at least two arm-shaped curved webs (12) which are formed by one end on the rubber bush (10) and by the other end on the outer edge (9) of the recess (8), and on the side remote from the angles (6) the rubber bush (10) is secured by a further web (11) at the edge (9) of the rubber bearing (11) which has a larger width than that of the arm-shaped webs (12).

2. A rubber bearing according to claim 1, characterized in that the openings (7) with which the metal angles (6) for attachment to the motor vehicle are formed are slots.

## Revendications

1. Palier en caoutchouc avec une ouverture réceptrice, disposée d'un côté écarté d'un véhicule automobile, pour recevoir une tige de retenue fixée à un pot d'échappement, avec des cornières métalliques (6) fixées au véhicule automobile, entre lesquelles est fixé un boulon (5) qui traverse le caoutchouc d'un côté tourné vers le véhicule automobile, l'ouverture réceptrice (14) étant formée par une douille en caoutchouc (10) qui est disposée, à déplacement limité, dans un évidement (8) du palier en caoutchouc, l'évidement (8) formant un volume libre autour de la douille en caoutchouc (10), caractérisé en ce que la douille en caoutchouc (10) est montée sensiblement orthogonale à l'axe de suspension par au moins deux entretoises (12) courbées en forme de bras qui sont conformées à une extrémité à la douille en caoutchouc (10) et à l'autre extrémité au bord extérieur (9) de l'évidement (8) et en ce que la douille en caoutchouc (10) est fixée, du côté écarté des cornières (6), au bord (9) du palier en caoutchouc par une autre entretoise (11) qui présente une largeur supérieure à celles des entretoises (12) en forme de bras.

2. Palier en caoutchouc selon la revendication 1, caractérisé en ce que les ouvertures (7) disposées dans les cornières métalliques (6) pour la fixation au véhicule automobile sont des trous oblongs.
